# EUROPEAN PATENT SPECIFICATION

(11) **EP 2 856 015 B1**
(45) Date of publication and mention of the grant of the patent: **22.11.2017**
(21) Application number: 13797190.9
(22) Date of filing: 31.05.2013
(51) Int. Cl.: F21V 33/00, F21S 2/00, F21V 8/00, F21Y 115/10, F21Y 105/10

(54) **LIGHT-EMITTING ASSEMBLY AND LIGHT-EMITTING FLOOR SYSTEM**
LICHTEMITTIERENDE ANORDNUNG UND LICHTEMITTIERENDES BODENSYSTEM
ENSEMBLE ÉMETTEUR DE LUMIÈRE ET SYSTÈME DE PLANCHER ÉMETTEUR DE LUMIÈRE

(30) Priority: 01.06.2012 US 201261654538 P
(43) Date of publication of application: 08.04.2015
(73) Proprietor: Revolution Display, LLC, Glendale, CA 91203 (US)
(72) Inventor: HOCHMAN, Jeremy, Glendale, California 91201 (US); KARLSSON, Mats, Glendale, California 91201 (US)
(74) Representative: Sawodny, Michael-Wolfgang
(86) International application number: PCT/US2013/043705
(87) International publication number: WO 2013/181594

(56) References cited:
- US-A1- 2002 141 181
- US-A1- 2004 250 457
- US-A1- 2005 140 270
- US-A1- 2006 002 153
- US-A1- 2006 239 001
- US-A1- 2011 149 558
- US-B1- 6 371 637
- US-B1- 7 215 863
- US-B2- 7 125 137
- US-B2- 7 441 913

## Description

### Background of the Invention

### Related Application

This application claims priority from U.S. Provisional Application Serial No. 61/654,538, filed on June 1, 2012, entitled "LIGHT-EMITTING ASSEMBLY AND LIGHT-EMITTING FLOOR SYSTEM CONTAINING THE

### Field

The present invention relates generally to the electrical arts. More particularly, the invention relates to a light emitting assembly and a light-emitting floor system containing same.

### Discussion of the Related Art

Viewers of musical concerts and other theatrical performances have come to expect more and more of the visual component accompanying the audio experience. Consequently, there is a need to enhance a concertgoer's sensations by mounting lighting assemblies to provide visual displays on floors, walls and ceilings.

It is a significant drawback of conventional light-emitting assemblies, in particular, light emitting assemblies used as stage floors, that the lighting elements must be protected from the performers at the expense of the visual experience. For example, in many conventional light-emitting assemblies, the lighting element must be recessed from surface, thus greatly diminishing the effectiveness of the lighting element. Consequently, it is a *desideratum* for lighting assemblies in which the lighting element is flush with the surface. Moreover, many conventional light-emitting assemblies must be covered with a protective surface, such as a transparent plastic surface. This is a drawback to stage designers and lighting technicians who prefer the black or other dark colored surface that is possible with a plywood or fiber board surface. More importantly, plastic surfaces are inherently slippery lacking the traction provided by plywood or fiberboard surfaces which can be of great importance to a performer. Consequently, it is also a *desideratum* for light-emitting assemblies that do not require a protective surface.

From US 2005/0140270 A1 a photon emitting device comprising a plurality of solid state radiation sources have been made known. The solid state radiation sources are disposed in an array pattern. The radiation of the radiation sources is received by a plurality of optical waveguides. US 2005/0140270 A1 is the closest state of the art and comprises all features of the preamble of claim 1.

US 7,441,913 B2 describes a lighting system for displays, in particular in motor vehicles. US 2002/0141181 A1 describes a lighting system of the prior art.

### Summary of the Invention

The aforementioned needs are satisfied by the light-emitting assembly in accordance with the invention according to claim 1.

The light-emitting assembly is a flooring panel, a ceiling panel or a wall panel. And in some aspects, the light emitting assembly is part of a light-emitting floor system. The light-emitting assembly includes a panel having a first side and an opposing second side with a plurality of bores extending from the first side to the second side and an LED light source comprising a circuit board, such as a printed circuit board and, in some aspects, a flexible printed circuit board, having a first side and an opposing second side, where the first side of the circuit board is adjacent to the second side of the panel. The LED light source further includes a plurality of LEDs and a plurality of optical wave guides, each wave guide having a first end and a second end, the first end disposed in one of the bores and the second end optically connected to one of the LEDs.

The panel is a plywood panel, a fiber board panel, a plastic panel or a concrete panel. The first side and the second side of the panel are parallel to one another or the first side and the second side of the panel incline toward one another. The panel has a thickness of from about 1,27 cm (½") to about 2,54 cm (1") and, in some embodiments, a thickness of about 1,905 cm (¾").

In some embodiments, the bores have a diameter of from about 1 mm to about 12 mm and, in some embodiments, a diameter of from about 2 mm to about 6 mm. In some embodiments, the bores are arranged in a matrix with a distance of from about 0,635 cm (¼") to about 22,86cm (¾') between the bores in each matrix column and from about 0,635 cm (¼") to about 22,86 cm (¾') between the bores in each matrix row.

In some embodiments, at least one LED provides a single color and, in some embodiments, at least one LED provides three colors.

In some embodiments, the first end of at least one optical wave guide is flush with the first side of the panel. In some embodiments, at least one optical wave guide comprises a cylinder having a length substantially the same as the length of a bore and press fit into a bore. And in some embodiments, the optical waveguides vary in length.

In some embodiments, at least one optical wave guide comprises an outwardly flaring portion extending beyond the second side of the panel and the end of the outwardly flaring portion contains a recess dimensioned to optically couple one of the LEDs. In some embodiments, the LEDs, the optical wave guides, and the bores are all aligned on an axis that is orthogonal to the first side and the second side of the panel.

In some embodiments, the light-emitting assembly further comprising a frame supporting the panel and the printed circuit board.

In another aspect, a light-emitting floor system includes a sub-floor panel and a plurality of adjoining light-emitting assemblies in accordance with the invention. In some embodiments, each panel is square or rectangular and the lengths of the sides of adjoining panels are the same. In some embodiments, the adjoining light emitting assemblies are removably secured to the surface of the sub-flooring panel.

### Brief Description of the Drawings

FIG. 1 is a perspective view, partially cut away, of a light emitting floor system in accordance with the invention;
FIG. 2 is a perspective, exploded view of a light emitting assembly as shown in FIG. 1;
FIGS. 3A-C are perspective views of three embodiments of optical wave guides for use in the light emitting assemblies in accordance with the invention;
FIGS. 4A and B are cut-away plan views illustrating a portion of two embodiments of light emitting assemblies in accordance with the invention;
FIG. 5 is a cut-away plan view of another embodiment of a light emitting assembly in accordance with the invention; and
FIG. 6 A-C side plan views of three embodiments of LED/optical wave guide combinations for use in the light emitting assemblies in accordance with the invention.

### Detailed Description of the Preferred Embodiments

Particular embodiments of the invention are described below in detail for the purpose of illustrating its principles and operation. However, various modifications may be made and the scope of the invention is not limited to the exemplary embodiments described below.

In some aspects, the light-emitting assemblies can be used as floor panels covering an underlying floor or sub-floor, as ceiling panels or as wall panels, including as panels covering an underlying wall, as free standing panels to create partition walls or simply as decorative panels hung on an existing wall. The light emitting assemblies can be used singly or can be interconnected. In some aspects, the light emitting assembly is a light-emitting floor panel, suitable for assembly with similar light emitting assemblies having sides with the same dimensions into a light-emitting portable floor that may be subsequently dismantled for reassembly on subsequent occasions at the same or another location.

In some aspects, the light emitting assembly is generally square or rectangular and, in some embodiments, each light-emitting assembly has a square shape with sides of two feet in length. The light-emitting assemblies, however, can be of any desired shape and size. The light-emitting assemblies can be secured to an underlying surface by any suitable means and in some aspects are releasably secured to the underlying surface.

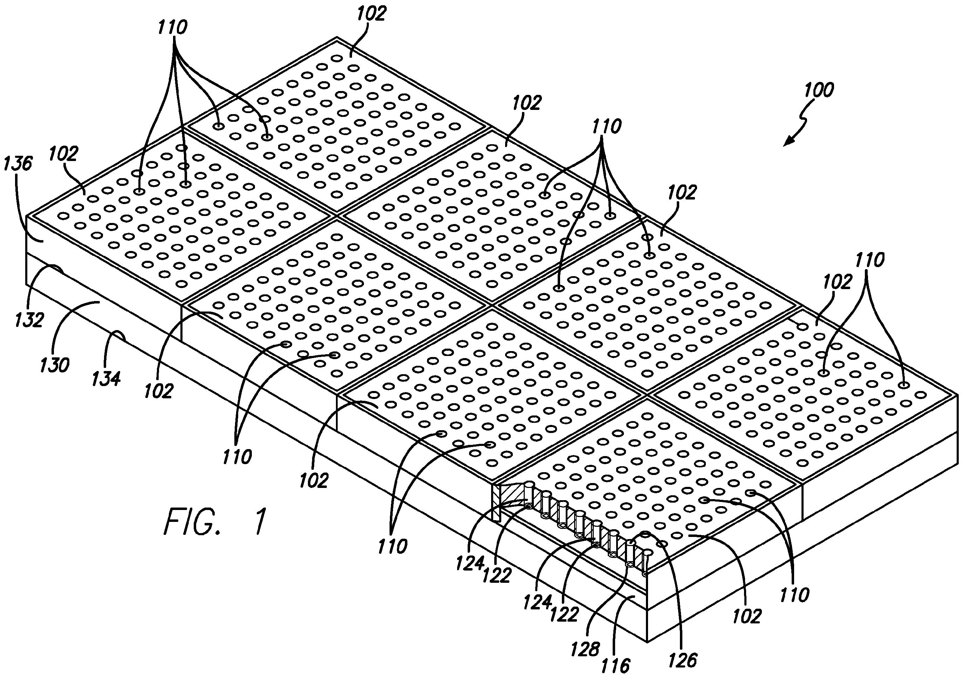

Referring to FIG. 1, there is shown a light emitting floor system 100 formed of eight adjoining light-emitting assemblies 102. It can be appreciated, however, that one or more light-emitting assemblies can be employed depending on desired size of the final light-emitting surface.

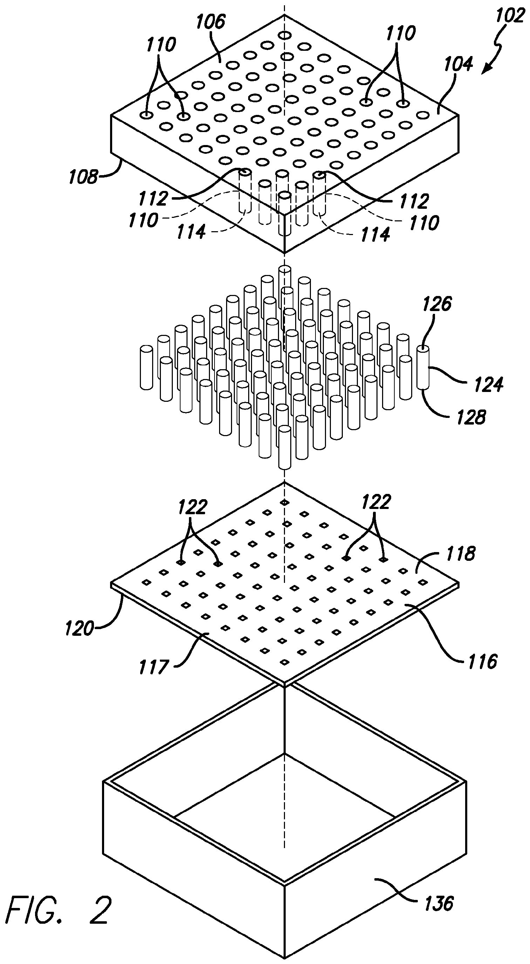

Referring additionally to FIG. 2, each light emitting assembly includes a panel 104 having a first side 106 and an opposing second side 108. In the embodiment shown in FIG. 1, the first side is substantially parallel to the second side. In alternative embodiments, the first side and the second side are inclined towards one another. The panel can be made of any suitable material such as an engineered wood, including plywood, oriented strand board, fiberboard and the like. Additional suitable materials include plastic, concrete and the like. Typically, the panel has a thickness of from about ½" to about 1" and in some embodiments about ¾".

A plurality of bores 110 for emitting light through the panel 104 extend from the panel's first side 106 to its second side 108. Each bore has a first end 112 and a second end 114.

In some aspects, the bores 110 have a diameter of from about 1 mm to about 12 mm and in some aspects, the bores have a diameter of from about 2 mm to about 6 mm. As illustrated in FIGS. 1 and 2, the bores can be regularly spaced. In some aspects, the bores are arranged in a matrix with a distance of from about 0,635cm (¼")to about 1,905cm (¾")and, in some embodiments, about 1,27cm (½") between the bores in each matrix column and a distance of from about 0,635cm (¼") to about 22,68cm (¾') and, in some embodiments, about 1,27cm (½") between the bores in each matrix row. In other aspects, the bores are irregularly spaced or are spaced to provide a specific configuration. In those embodiments, where the panel is an engineered wood panel, such as a fiberboard panel, the bores can be formed using a CNC router.

Any suitable LED light source can be used, including circuit boards and individual LED pixels connected with wires. In the representative embodiment shown in FIG. 2, a light source 116 includes a circuit board 117 having a first side 118 and an opposing second side 120 disposed adjacent to the second side 108 of the panel 102. The circuit board is preferably a printed circuit board and, in some embodiments, a flexible printed circuit board having a plurality of electrical contacts thereon. The electrical contacts are connected to a controller (not shown).

A plurality of LEDs 122 is provided on the first side 118 of the printed circuit board 117. The LEDs can be, for example, conventional LEDs, organic LEDs (OLEDs) or polymer LEDs (PLEDs). One end of each of the electrical contacts is also coupled with an LED 122. The LEDs may be soldered in a conventional manner or may be the more compact surface mounted type. Thus, each LED is electrically coupled with a controller. Each LED is also coupled with a power source.

The LEDs 122 may provide a single color, for example red, to provide a monochrome display. Alternatively, an LED matrix may be made up of three different colors, for example, red, green and blue, of LED. Alternatively, tricolor LEDs, which are single LEDs able to display three different colors, for example, red, green and blue, may be used. With either of these latter two arrangements it is possible to provide a full color display.

In the embodiment shown in FIGS. 1 and 2, an optical wave guide 124 is disposed in each bore 110. The optical wave guide can be made out of any suitable material and can be either rigid or flexible. In some aspects the optical wave guide is an optical fiber.

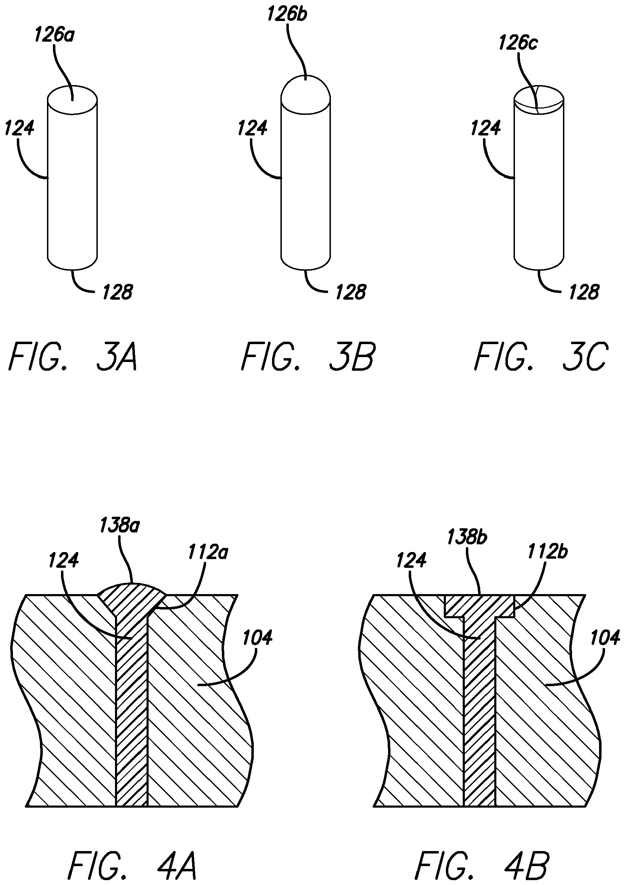

Each optical wave guide has a first, free end 126 and a second end 128 optically connected to one of the LEDs 122. In the embodiment shown in FIGS. 1 and 2, the optical wave guide has a cylindrical shape with a length substantially the same as the length of the bore and a diameter such that the optical wave guide can be press fit in the bore. In some embodiments, the optical waveguides vary in length. In the embodiments, shown in FIGS. 3A-C, the first end 126a can be planar (FIG. 3A), the first end 126b can be convex (FIG. 3B) or the first end can be concave (FIG. 3C.)

In the embodiment shown in FIG. 1, the first end 126 of the optical wave guide 124 has a diameter that is substantially the same as the diameter of the bore 110. In other embodiments, the first end contains an enlarged diameter. In the representative embodiment shown in FIG. 4A, the first end 112a of the bore flares outwardly. The first end 138a of the optical wave guide 124 contains a complementary flared portion which fits in the flare of the bore and a hemispherical portion which extends above the first side. In the representative embodiment shown in FIG. 4B, the optical wave guide ends in a flange portion 138b which fits in complimentary recess 112b in the first end of the bore.

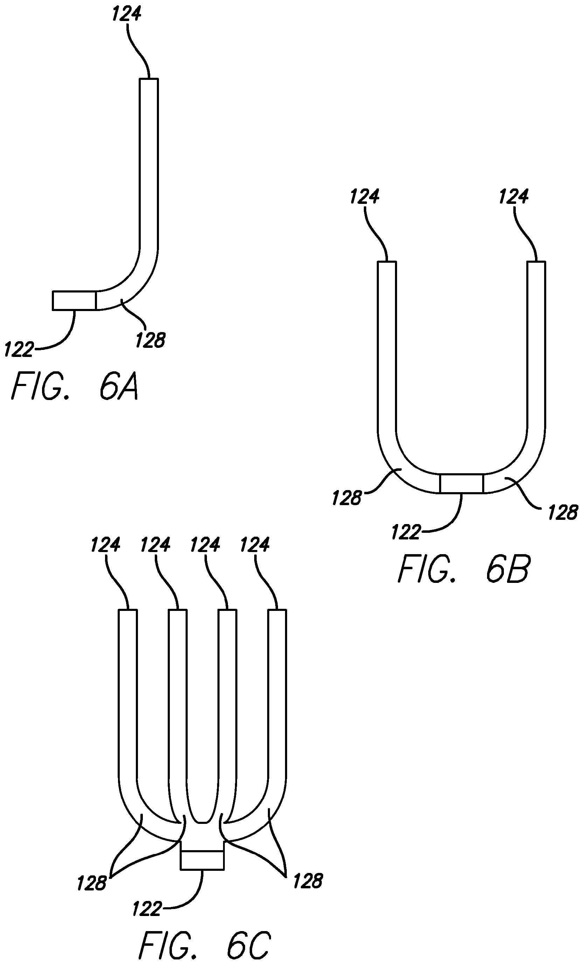

In some aspects, the second end 128 of each optical wave guide 124 is optically connected to one of the LEDs 122. In the embodiments shown in FIGS. 1, 2, 5 and 6A, the LED 122 is optically connected to single optical waveguide. 124. In the embodiments shown in FIGS 6B and 6C, the LED is optically connected to the second end of more than one optical waveguide.

In the embodiments shown in FIGS. 1, 2 and 5, the LEDs 122, the optical wave guides 124, and the bores 110 are all aligned on an axis the is orthogonal to the first side 106 and the second side 108 of the panel 104. In the embodiments shown in FIGS. 6A-6C, the LED 122, at least a portion of the second end of the optical wave guide 124, and the bore (not shown) are aligned on different axes.

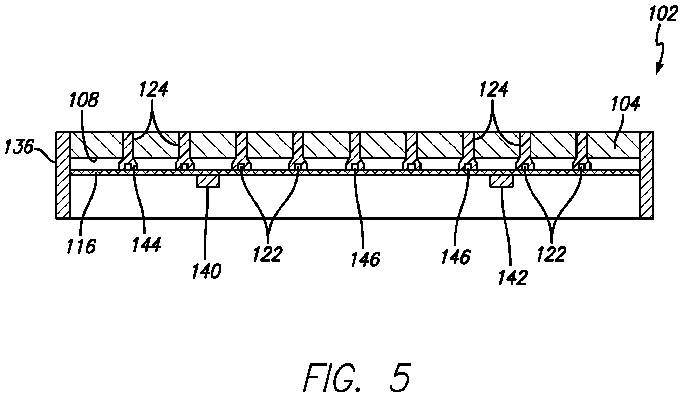

In the embodiment shown in FIG. 5, the second end of each optical wave guide 124 contains an outwardly flaring portion 144 extending beyond the second side 108 of the panel 104. The end of the outwardly flaring portion contains a recess 146 dimensioned to optically couple one of the LEDs 122.

One or more electrical additional components may be hosted on the printed circuit board 117. For example, in the embodiment shown in FIG 5. a power connection 140 and a data connection 142 are provided on the second side 120 of the printed circuit board.

Returning to FIGS. 1 and 2, as well as 5, there are shown embodiments where the panel 104 and printed circuit board 117, in their positions adjacent one another, as well as to protect their edges. The frame is made of any suitable material including metals, such as stainless steel or aluminum.

In the embodiment illustrated in FIG. 1, there is also shown a light-emitting floor system that includes a sub-floor 130 having a top side 132 and a bottom side 134. The sub-floor is made of any suitable material, such as an engineered wood, including plywood, oriented strand board, fiberboard and the like. In the embodiment shown in FIG. 1, the sub-floor has a rectangular surface with a length of eight feet and a width of about four feet.

The eight adjoining light emitting assemblies 102 each have a square surface with a length of two feet on each side. The light emitting assemblies are secured to one another and to the top side of the sub-floor using any suitable method. Adjoining panels may be powered independently or dependently. The adjoining panels may for instance be electrically interconnected.

The adjoining panels 104 are preferably configured to emit sequenced lights. Sequenced lights include a plurality of LEDs 122 that are controlled to display varying intensity and/or color of light, including moving images. The LEDs are preferably in communication with each other and controlled by a single or a series of controllers, which coordinate the display provided. The LEDs may be connected to each other and/or the controller by any suitable means, including, but not limited to, wired or wireless connections.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A light-emitting assembly comprising:
a panel (104) having a first side (106) and an opposing second side (108);
the panel (104) is a flooring panel, a ceiling panel or a wall panel and the first side (106) and the second side (108) of the panel (104) are parallel to one another or the first side (106) and the second side (108) of the panel incline toward one another; the panel is a plywood panel, a fiber board panel, a plastic panel or a concrete panel;
a plurality of bores (110) extending from the first side (106) to the second side (108);
an LED light source comprising:
a circuit board (117) having first side (106) and an opposing second side (108), the first side (106) of the circuit board (117) adjacent to the first side of the panel (104);
a plurality of LEDs (122) operably connected to the first side (106) of the circuit board (117) ; **characterized by**,
a plurality of optical wave guides (124), each wave guide having a first end (126) and a second end (128), the first end (126) disposed in one of the bores (110) and the second end (128) optically connected to one of the LEDs
the panel has a thickness of from about 15,24 cm (½') to about 2,54cm (1 "), preferably of about 1,905cm (¾") and
the LED (122), the optical wave guide (124) and the bore are all aligned on an axis that is orthogonal to the first side and the second side of the panel.

2. The light-emitting assembly of claim 1 wherein the circuit board (117) is a printed circuit board or a flexible printed circuit board.

3. The light-emitting assembly of claim 1 wherein the bores have a diameter of from about 1 mm to about 12 mm, preferably from about 2 mm to about 6 mm.

4. The light-emitting assembly of claim 3 wherein the bores are arranged in a matrix with a distance of from about 0,635cm (¼") to about 22,86cm (¾') between the bores in each matrix column and from about 0,635cm (¼") to about 22,86cm (¾') between the bores in each matrix row.

5. The light-emitting assembly claim 1 wherein at least one LED provides a single color or at least one LED provides three colors.

6. The light-emitting assembly claim 1 wherein the first end (126) of at least one optical wave guide is flush with the first side (106) of the panel.

7. The light-emitting assembly claim 1 wherein at least one optical wave guide comprises a cylinder having a length substantially the same as the length of a bore (110) and press fit into a bore.

8. The light emitting assembly claim 1 wherein the optical waveguides vary in length.

9. The light-emitting assembly claim 1 wherein at least one optical wave guide comprises an outwardly flaring portion extending beyond the second side of the panel and wherein the end of the outwardly flaring portion contains a recess dimensioned to optically couple one of the LEDs.

10. The light-emitting assembly of the claim 1 further comprising a frame supporting the panel and the circuit board.

## Patentansprüche

1. Licht-emittierende Anordnung, umfassend:
eine Platte (104) mit einer ersten Seite (106) und einer gegenüberliegenden, zweiten Seite (108);
wobei die Platte (104) eine Bodenplatte, eine Deckenplatte oder eine Wandplatte ist und die erste Seite (106) und die zweite Seite (108) der Platte (104) parallel zueinander angeordnet oder die erste Seite (106) und die zweite Seite (105) der Platte zueinander geneigt sind; wobei die Platte eine Sperrholzplatte, eine Hartfaserplatte, eine Kunststoffplatte oder eine Betonplatte ist;
eine Vielzahl von Bohrungen (110), die sich von der ersten Seite (106) bis zur zweiten Seite (108) erstrecken;
eine LED-Lichtquelle, umfassend:
eine Leiterplatte (117) mit einer ersten Seite (106) und einer gegenüberliegenden, zweiten Seite (108), wobei die erste Seite (106) der Leiterplatte (117) der ersten Seite der Platte (104) benachbart ist;
eine Vielzahl von LEDs (122), die mit der ersten Seite (106) der Leiterplatte (117) betätigbar verbunden sind,
**gekennzeichnet durch**
eine Vielzahl von Lichtwellenleitern (124), wobei jeder Wellenleiter ein erstes Ende (126) und ein zweites Ende (128) aufweist, das erste Ende (126) in einer der Bohrungen (110) angeordnet ist und das zweite Ende (128) optisch mit einer der LEDs verbunden ist,
die Platte eine Dicke von etwa 15,24 cm (1/2') bis etwa 2,54 cm (1"),
vorzugsweise etwa 1,905 cm (3/4") aufweist, und
die LED (122), der Lichtwellenleiter (124) und die Bohrung alle auf einer Achse ausgerichtet sind, die orthogonal zur ersten Seite und zur zweiten Seite der Platte verläuft.

2. Licht-emittierende Anordnung nach Anspruch 1, wobei die Leiterplatte (117) eine gedruckte Leiterplatte oder eine flexible gedruckte Leiterplatte ist.

3. Licht-emittierende Anordnung nach Anspruch 1, wobei die Bohrungen einen Durchmesser von etwa 1 mm bis etwa 12 mm, vorzugsweise etwa 2 mm bis etwa 6 mm, aufweisen.

4. Licht-emittierende Anordnung nach Anspruch 3, wobei die Bohrungen in einer Matrix mit einem Abstand von etwa 0,635 cm (1/4") bis etwa 22,86 cm (3/4') zwischen den Bohrungen in jeder Matrixspalte und von etwa 0,635 cm (1/4") bis etwa 22,86 cm (3/4') zwischen den Bohrungen in jeder Matrixzeile angeordnet sind.

5. Licht-emittierende Anordnung nach Anspruch 1, wobei wenigstens eine LED eine einzige Farbe oder wenigstens eine LED drei Farben bereitstellt.

6. Licht-emittierende Anordnung nach Anspruch 1, wobei das erste Ende (126) wenigstens eines Lichtwellenleiters bündig mit der ersten Seite (106) der Platte angeordnet ist.

7. Licht-emittierende Anordnung nach Anspruch 1, wobei wenigstens ein Lichtwellenleiter einen Zylinder mit einer Länge im Wesentlichen gleich der Länge einer Bohrung (110) mit Presssitz in einer Bohrung aufweist.

8. Licht-emittierende Anordnung nach Anspruch 1, wobei die Lichtwellenleiter unterschiedliche Längen aufweisen.

9. Licht-emittierende Anordnung nach Anspruch 1, wobei wenigstens ein Lichtwellenleiter einen nach außen aufgeweiteten Abschnitt aufweist, der sich über die zweite Seite der Platte hinaus erstreckt und wobei das Ende des nach außen aufgeweiteten Abschnitts eine Ausnehmung aufweist, die zum optischen Koppeln einer der LEDs dimensioniert ist.

10. Licht-emittierende Anordnung nach Anspruch 1, ferner umfassend einen Rahmen, der die Platte und die gedruckte Leiterplatte trägt.

## Revendications

1. Assemblage lumineux comprenant :
un panneau (104) possédant une première face (106) et une deuxième face (108) opposée, lequel panneau (104) est un panneau de revêtement de sol, un panneau de plafond ou un panneau mural, la première face (106) et la deuxième face (108) du panneau (104) étant parallèles l'une à l'autre ou la première face (106) et la deuxième face (105) du panneau s'inclinant l'une vers l'autre, le panneau étant un panneau de contreplaqué, un panneau de fibres, un panneau de plastique ou un panneau de béton.
plusieurs perçages (110) allant de la première face (106) à la deuxième face (108) ;
une source lumineuse à DEL comprenant :
une carte de circuits (117) possédant une première face (106) et une deuxième face (108) opposée, la première face (106) de la carte de circuits (117) étant adjacente à la première face du panneau (104) ;
plusieurs DEL (122) connectées de façon opérationnelle à la première face (106) de la carte de circuits (117) ;
**caractérisé en ce qu'**il comporte plusieurs guides d'ondes optiques (124) dont chacun possède une première extrémité (126) et une deuxième extrémité (128), la première extrémité (126) étant disposée dans l'un des perçages (110) et la deuxième extrémité (128) étant en connexion optique avec l'une des DEL,
**en ce que** le panneau a une épaisseur d'environ 15,24 cm (1/2 pied) à environ 2,54 cm (1 pouce), de préférence d'environ 1,905 cm (3/4 de pouce) et
**en ce que** la DEL (122), le guide d'ondes optique (124) et le perçage sont tous alignés sur un axe perpendiculaire à la première face et à la deuxième face du panneau.

2. Assemblage lumineux selon la revendication 1, dans lequel la carte de circuits (117) est une carte de circuits imprimés ou une carte de circuits imprimés flexible.

3. Assemblage lumineux selon la revendication 1, dans lequel les perçages ont un diamètre d'environ 1 mm à environ 12 mm, de préférence d'environ 2 mm à environ 6 mm.

4. Assemblage lumineux selon la revendication 3, dans lequel les perçages sont disposés suivant une grille avec une distance d'environ 0,635 cm (1/4 de pouce) à environ 22,86 cm (3/4 de pied) entre les perçages de chaque colonne de la grille et d'environ 0,635 cm (1/4 de pouce) à environ 22,86 cm (3/4 de pied) entre les perçages de chaque ligne de la grille.

5. Assemblage lumineux selon la revendication 1, dans lequel au moins une DEL produit une seule couleur ou au moins une DEL produit trois couleurs.

6. Assemblage lumineux selon la revendication 1, dans lequel la première extrémité (126) de l'au moins un guide d'ondes optique affleure sur la première face (106) du panneau.

7. Assemblage lumineux selon la revendication 1, dans lequel au moins un guide d'ondes optique comprend un cylindre dont la longueur est sensiblement égale à la longueur d'un perçage (110) et ajusté par calage dans un perçage.

8. Assemblage lumineux selon la revendication 1, dans lequel la longueur des guides d'ondes optiques varie

9. Assemblage lumineux selon la revendication 1, dans lequel au moins un guide d'ondes optique comprend une partie évasée vers l'extérieur qui s'étend au-delà de la deuxième face du panneau et dans lequel l'extrémité de la partie évasée vers l'extérieur contient un renfoncement dimensionné pour le couplage optique de l'une des DEL.

10. Assemblage lumineux selon la revendication 1, comprenant en outre un cadre qui porte le panneau et la carte de circuits.
